# EUROPEAN PATENT SPECIFICATION

(11) **EP 3 308 316 B1**
(45) Date of publication and mention of the grant of the patent: **02.09.2020**
(21) Application number: 16804678.7
(22) Date of filing: 05.07.2016
(51) Int. Cl.: G06F 21/60, G06F 21/50, G06F 12/16, G06F 21/56, G06F 21/53, G06F 12/14, G06F 21/62, G06F 21/85

(54) **OPERATING SYSTEM INDEPENDENT, SECURE DATA STORAGE SUBSYSTEM**
VOM BETRIEBSSYSTEM UNABHÄNGIGES, SICHERES DATENSPEICHERSUBSYSTEM
SYSTÈME D'EXPLOITATION INDÉPENDANT, SOUS-SYSTÈME DE MÉMORISATION DE DONNÉES SÉCURISÉE

(43) Date of publication of application: 18.04.2018
(73) Proprietor: Viirii, LLC, Marietta, GA 30064 (US)
(72) Inventor: COPELAND, Scott, R., Pasadena, TX (US)
(74) Representative: Osha Liang
(86) International application number: PCT/US2016/041019
(87) International publication number: WO 2016/197155

(56) References cited:
- US-A1- 2013 312 102
- US-A1- 2014 150 060
- US-A1- 2015 058 970
- US-B1- 6 470 424
- US-B2- 7 689 803
- US-B2- 8 424 023
- US-B2- 9 043 874

## Description

### Field of the Invention

The present invention is in the field of electrical computer or digital data processing system processes and apparatuses for selecting and accessing data storage (Class 711). Specifically, the present invention comprises systems, methods, and apparatus for preventing file data alteration not consistent with defined security policy (subclass 26). More specifically, the subject matter of the present invention comprises means to prevent data/file tampering by limiting write access to authorized entities or processes (subclass 27).

### Summary of the Invention

The present Secured Data Storage Subsystem (SDSS) is independent of the operating system (OS) of the electrical computer/data processing system in which it is being used. The SDSS includes an intermediary data handler device that is functionally disposed between the OS and the memory of the main data storage device of an electrical computer or data processing system. The purpose of the intermediary data handler is to protect certain data (e.g., registry files) on the storage device from modification (e.g., by malware or unauthorized access). In the embodiments illustrated herein, the SDSS subsystem takes an incoming modify/write request from the operating system, and processes the request (and any associated data), not according to the operating system's instructions, but according to its own file system and rule set instructions - without writing to or modifying the target file on the storage device. The SDSS then "represents" to the OS that it has complied with the request and replies with an appropriate mocked-up data response. That is, the outgoing data the mock response has the content and structural format that is expected by the OS in a reply from the storage device. The SDSS technology purposefully misreports the result of the modify/write request targeting protected data and files, while maintaining autonomous control over the protected data and how it is handled. This provides the security and integrity of the protected data on a storage device, and has the advantage of being usable across platforms, without regard to the particular OS of the host electrical computer or data processing system.

Since the SDSS technology stores the protected data according to its own structure/rule set, and mimics in its replies to the OS whatever data structure the OS expects to see, the data stored on a storage device with the SDSS technology is readily accessible to any particular OS, without needing to change to the partition or format structure. The present SDSS can mimic the NTFS format while in a Microsoft Windows computer in one moment, and seconds later mimic the EXT4 format while being accessed by a Linux computer. The SDSS technologies intermediary data handler can mimic every format structure and partition scheme used by substantially all current operating systems. The present invention utilizes two distinct modes of operation. Normal mode allows the SDSS to handle read and write requests by an operating system to fulfill normal daily operations. The Administrative mode allows the SDSS to provide options to a User (i.e., an system administrator) form outside of the computer and the operating system. A User can utilize a mobile computing device and its WiFi/Bluetooth capability to speak directly with the SDSS hardware and utilize administrative functions independent of the storage devices or operating systems control. This system leaves hackers with no ability to influence the handling of data on the storage device as they do not have access to the SDSS firmware and can only influence the operating system. Even if the operating system is compromised, the SDSS technology is independent and will not allow the operating system to corrupt protected data in the storage device memory. Document US2005091669 discloses an interface module which performs message translation between application layer and the operating system of a device.

### Reference Numerals

**10 -** Intermediary Data Handler
**15 -** Communications Layer (Intermediary Data Handler **10** & Generated Data **20**)
**20 -** Generated (outgoing) Data
**25 -** Communications Layer (Intermediary Data Handler **10** & Admin Only Data **30**)
**30 -** Admin Only Data
**40 -** Converted Data Structure
**45 -** OS Specific Data Structure(s): e.g., a) Linux; b) Windows; c) OS X
**50 -** Data Conversion by Intermediary Data Handler **10**
**100 -** Computing Device
**110 -** Communications Layer, Read/Write requests between Computing Device **100** & Storage Device **200**
**120** - User Device
**130** - User Communications App
**140 -** Signal (Wireless)
**150 -** USB Connection
**160 -** Operating System(s): a) Linux; b) Windows; c) OS X
**170 -** CPU
**175 -** RAM
**178 -** SDSS/Data Handler Software/Instruction Set
**180 -** BIOS (Basic Input Output System) / ROM (Read Only Memory)
**185 -** Wireless Communication Hardware
**190 -** Administrator Device
**195 -** Admin Software Application
**200 -** Storage Device
**210 -** Storage Device Memory
**220 -** Communications Layer (Storage Device **200** & Intermediary Data Handler **10**)
**230 -** Communications Layer (Data Handler **10** & Storage Device Memory **210**)
**300 -** Received Write Request Process
**305 -** Start: processing received Write Request
**310** - Process
**320** - Decision
**330** - Process
**340** - Process
**350** - Process
**360** - Process
**370** - End: processing received Write Request
**400** - Received Read Request Process
**405** - Start: processing received Read Request
**410** - Process
**420** - Process
**430** - Process
**440** - Process
**450** - End: processing received Read Request
**500** - Change OS Platform Emulation
**500** - Start: change OS emulation process
**510** - Decision
**520** - Decision
**530** - Process
**540** - Decision
**550** - End: change OS emulation process
**800** - Administrative Mode Process
**805** - Start: enter Administrative Mode
**810** - Decision
**820** - Decision
**830** - Process
**840** - Decision
**850** - Process
**860** - End: exit Administrative Mode

### Brief Description of Figures

Figures 1A & 1B are schematic overviews: (A) of a typical prior art electrical computer system, and (B) of an electrical computer system including the present Secure Data Storage Subsystem.
Figure 2 illustrates hardware circuits useful in an Intermediary Data Handler.
Figure 3A shows a User Device communicating with the Intermediary Data Handler.
Figure 3B shows an Admin Device using an Admin App to communicate with multiple Intermediary Data Handlers in an enterprise setting.
Figure 3C a flow chart showing the process of a device switching the Intermediary Data Handler to an administrative mode.
Figure 4A shows the Intermediary Data Handler orchestrating data on an internal storage device.
Figure 4B shows the Intermediary Data Handler orchestrating data on an external storage device.
Figure 5 shows the intermediary data handler converting the data from the operating system to the storage medium and vice versa.
Figure 6A shows how the Intermediary Data Handler misreports the actual data structure of the storage device to mimic the structure that the OS is expecting to see.
Figure 6B a flow chart showing, from the perspective of the Intermediary Data Handler, how a User would change the operating system emulation.
Figure 7A a flow chart showing the operating sending a write request to the storage device.
Figure 7B a flow chart showing the operating sending a read request to the storage device.

### Description of the Invention

Referring now to the drawings, the details of preferred embodiments of the present invention are graphically and schematically illustrated. Like elements in the drawings are represented by like numbers, and any similar elements are represented by like numbers with a different lower case letter suffix. The invention is disclosed in the appended claims.

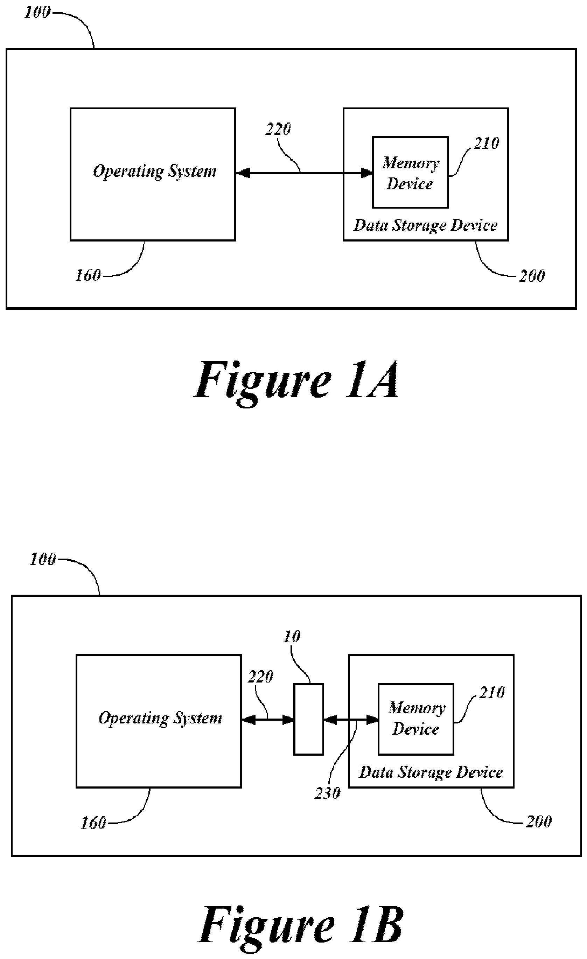

The heart of the present Secured Data Storage Subsystem (SDSS) is an Intermediary Data Handler **10.** In the typical electrical computer system illustrated in Figure 1A, read/write instructions are communicated by the Operating System ("OS") directly to the computer's memory storage device **200.** The memory storage device in turn acts on the instructions and writes to or reads from the storage device memory **210**, communicated a reply communication to the OS with the result of the read/write call. Thus, in the typical computer system, the memory storage device **200** operates on any read/write call from the OS. In contrast, as shown in Figure 1B, a computer system enabled with the present invention, the OS does not directly communicate with the computer's memory storage device **200**, but with the present Intermediary Data Handler **10.** In like fashion, the computer's memory storage device **200** does not communicate directly with the OS, but only through the Intermediary Data Handler **10.** In other words, in practicing the present invention, all read/write calls from the OS are first processed by the Intermediary Data Handler **10.**

Functionally, the Intermediary Data Handler **10** sits between the Operating System **160** of a Computing Device **100** and the Storage Device Memory **210** of the Storage Device **200.** See Figure 1B. As the Computing Device **100** sends calls/requests to the Storage Device **200** via the communication Layer **110** they are intercepted by the Intermediary Data Handler **10** via the Layer **220.** The Intermediary Data Handler **10** then, independent of the Operating System **160**, converts the Data **40** into its own format and stores it via the Layer **230.** The Intermediary Data Handler **10** applies its own rule set to how the Data **40** is stored, the format it is stored in and how it can be accessed and manipulated. The Intermediary Data Handler **10** will misreport the Data **40** structure to the Operating System **160** as to make the technology completely transparent to the Operating System **160** and the end User. By maintaining control of the Data **40** with hardware that acts independent of User and Operating System **160** instructions, the Intermediary Data Handler **10** can prevent malicious code from effecting meaningful changes to the Operating System **160** files while at the same time ensuring the integrity of User files. Hackers cannot compromise the SDSS/Intermediary Data Handler software **178**, because Data Handler Software **178** acts independently of all other software on the computing device **100** with which it is associated.

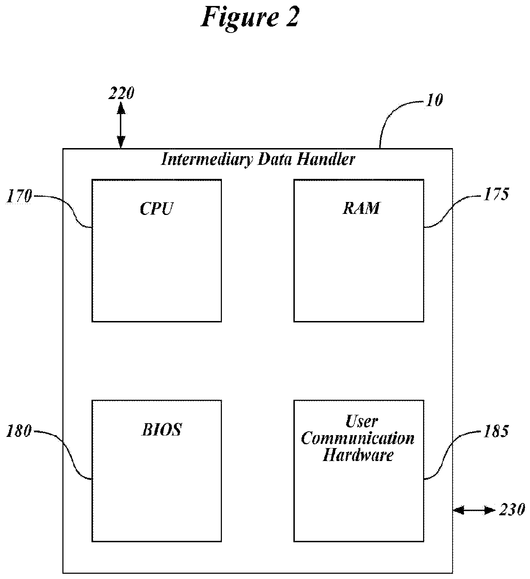

The structure of the Intermediary Data Handler **10** should be sufficient that it can maintain absolute autonomy from all other components of the Computing Device **100** (see Figure 2). The hardware inserted between Layer **220** and Layer **230** comprises Processor circuitry (e.g., a CPU) **170**, Memory circuitry (e.g., RAM) **175**, and in some embodiments: BIOS/ROM **180** circuitry and User Communication Hardware **185.** The data handler **10** includes SDSS/Data Handler Software **178**, which is adapted to enable the Data Handler **10** and its hardware/firmware components to carry out its functions.

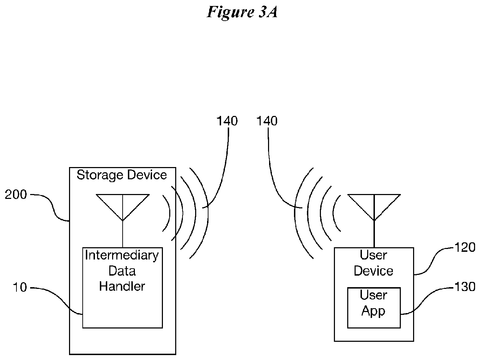

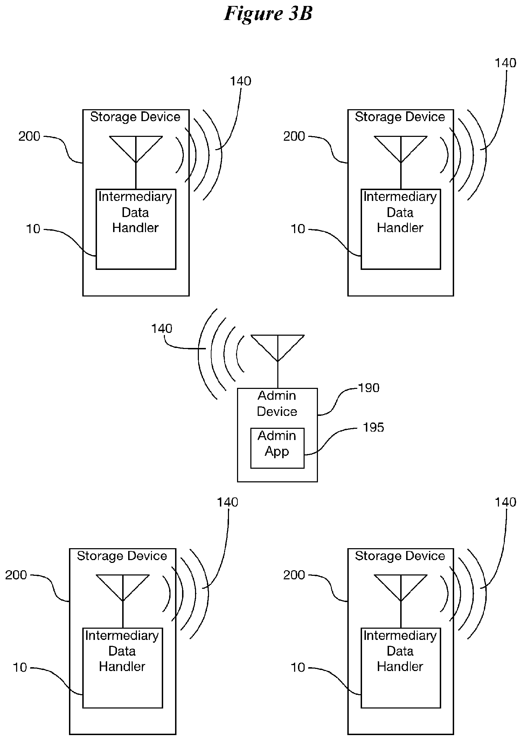

The User Communication Hardware **185** of the Intermediary Data Handler **10** is used to communicate with a wireless User Device **120** or an Admin Device **190** (see Figure 3A to 3C). A User Device **120** with a User App **130** or an Admin Device **190** with an Admin App **195** can be used to establish a Wireless communication session **140** with the Intermediary Data Handler **10**, which is preferably onboard the Storage Device **200.** The Wireless session **140** allows the User App **130** or the Admin App **195** to provide the end User with various options such as restoring data, switching to and from and administrative mode, maintenance options, emulation options, etc.

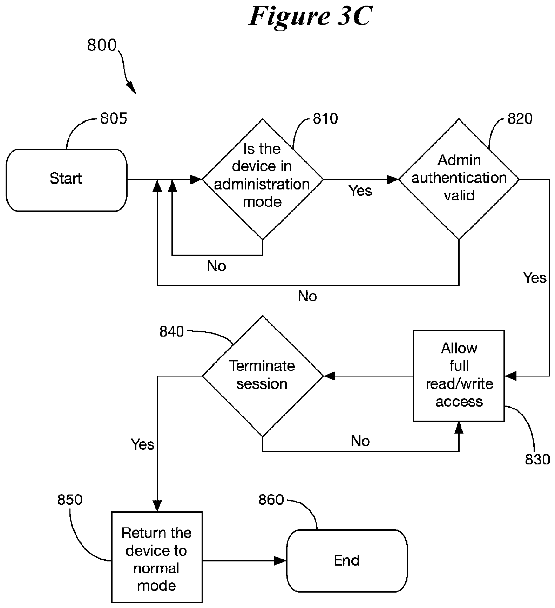

As shown in Figure 3C, a User Device **120** or an Admin Device **190** can switching the Intermediary Data Handler **10** to an Administrative Mode **800.** Switching into Administrative Mode **800** allows the Intermediary Data Handler **10** full read and write access to the Storage Device **200** with which it is associated. When initiating the Administrative Mode Start process **805**, a decision **810** is made to detect whether the Intermediary Device Handler **10** is in an administrative mode. If "Yes," then a decision is made to determine if the User has valid authentication **820.** If "Yes," then the SDSS allows full Read/Write Access **830.** Upon Session Termination **840** the Intermediary Data Handler **10** device returns the SDSS to its normal/secure mode **850** and the Intermediary Data Handler **10** exits **860** the Administrative Mode **800.**

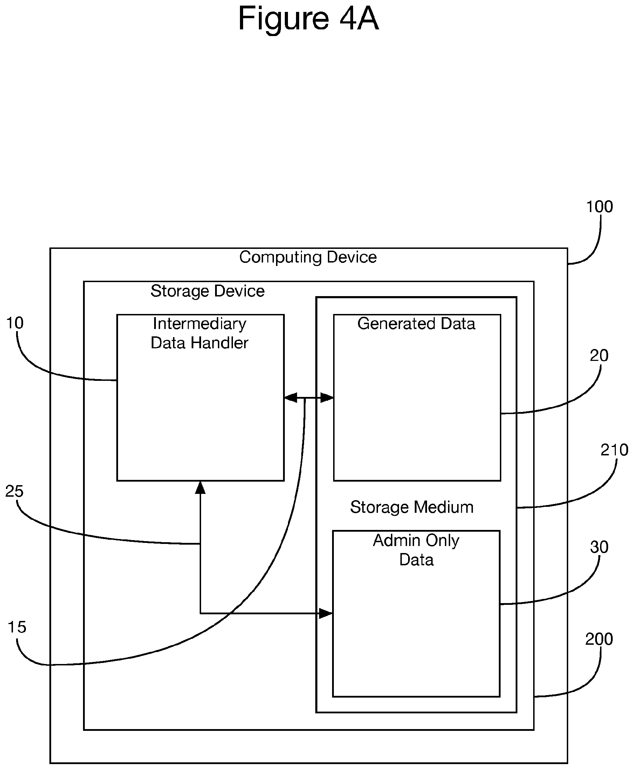

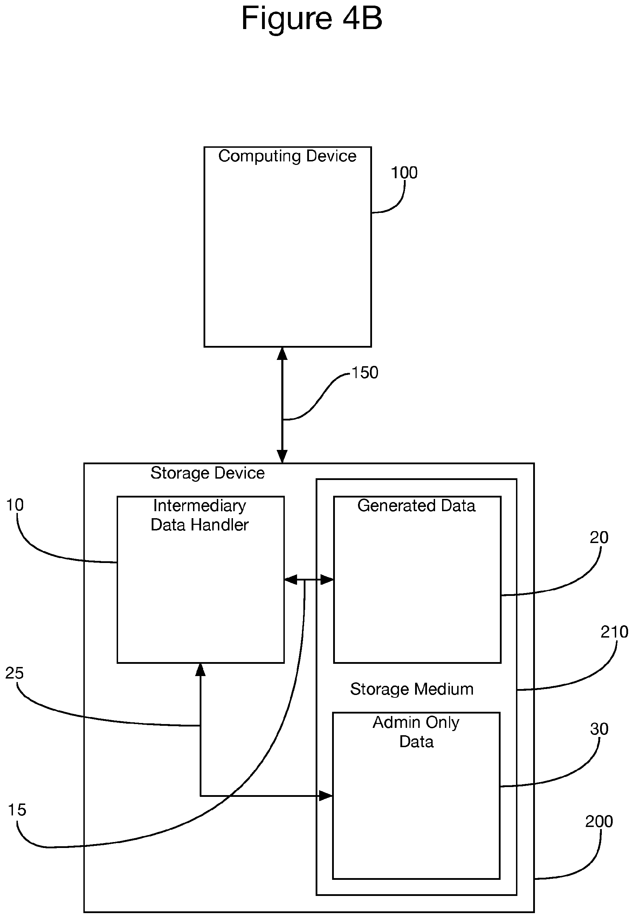

The Intermediary Data Handler **10** segregates the data sent to the Storage Device **100** into two separate file structures via Layer **15** and Layer **25** (see Figure 4A). One structure is the Generated Data **20** structure, which is incoming data to be stored on the storage device memory **210.** This is the structure where all data that is sent to the Storage Device **200** is directed by default. The other structure is the Admin Only Files **30.** This is where important files, which should not be altered without the User[s express instructions, are stored. Files in the Admin Only Files **30** section can only be altered if the User switches the Intermediary Data Handler **10** into administrative mode. If the Computing Device **100** sends an instruction to the storage device telling it to alter a file that resides in the Admin Only Files **30** section and the Intermediary Data Handler **10** is not in an administrative mode, then the instruction is disregarded, misreported, or redirected to the Generated Data **20** section. By employing this methodology the Intermediary Data Handler **10** can maintain the integrity of the Admin Only Files **30** data and prevent malicious instructions from committing any offense. The same can be accomplished by using an external storage device using a USB **150** connection (see Figure 4B).

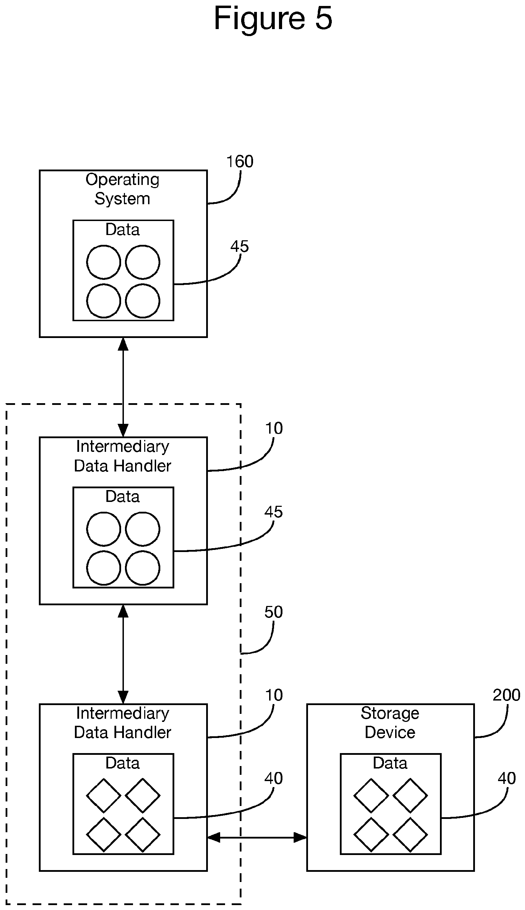

The Intermediary Data Handler **10** uses the Data Conversion **50** to convert to and from its dual structured format to one contiguous format that is appropriate to the Operating System **160** it is working with (see Figure 5). The Data **45** coming from the Operating System **160** passes through the Data Conversion **50** and is transformed into Data **40** before being stored. The same is true in reverse. Data **40** coming from the Storage Device **200** passes through the Data Conversion **50** implemented by the Intermediary Data Handler **10** and is made to mimic the appropriate Data **45** structure that is native to the Operating System **160.**

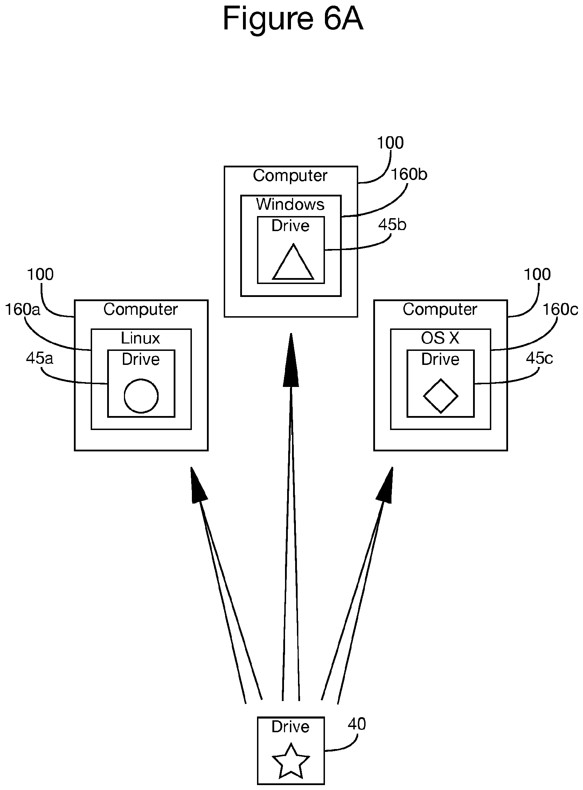

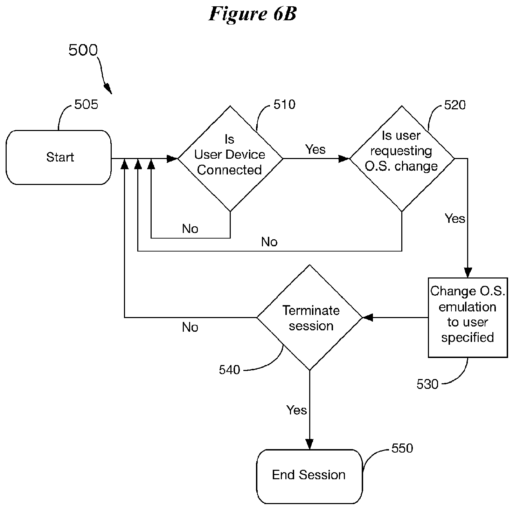

Mimicking a file system allows the Data **40** on a Storage Device **200** to be acceptable to another system without making any actual partition or formatting changes and still be perceived as native by the host system (see Figures 6A and 6B). By being able to mimic an Operating System **160** Data **45** structure, the Storage Device **200** can be placed into a Computer **100** with Linux **160a**, Windows **160b**, OS X **160c**, etc., and be accepted by the Operating System **160** as being a device with a native data structure such as **45a**, **45b** and **45c.** This allows the Storage Device **200** to be move from one Computing Device **100** to another Computing Device **100** with a different Operating System **160** without having any compatibility issues.

Figure 6B exemplifies the Change OS Emulation Process **500** for changing which OS **160** is being by the SDSS. The OS Emulation Selection Process **500** when started **505** first does a Connectivity Check **510** to determine whether a User Device **120** is connected to the Intermediary Data Handler **10.** If "Yes," then the Selection Process **500** checks to see if the User Device **120** is requesting an operating system change **520.** If "Yes", then the OS Emulation Selection Process **500** implements the requested emulation change **530.** If Terminate Session **540** decision is subsequently made, then End Session **550** procedure is implemented.

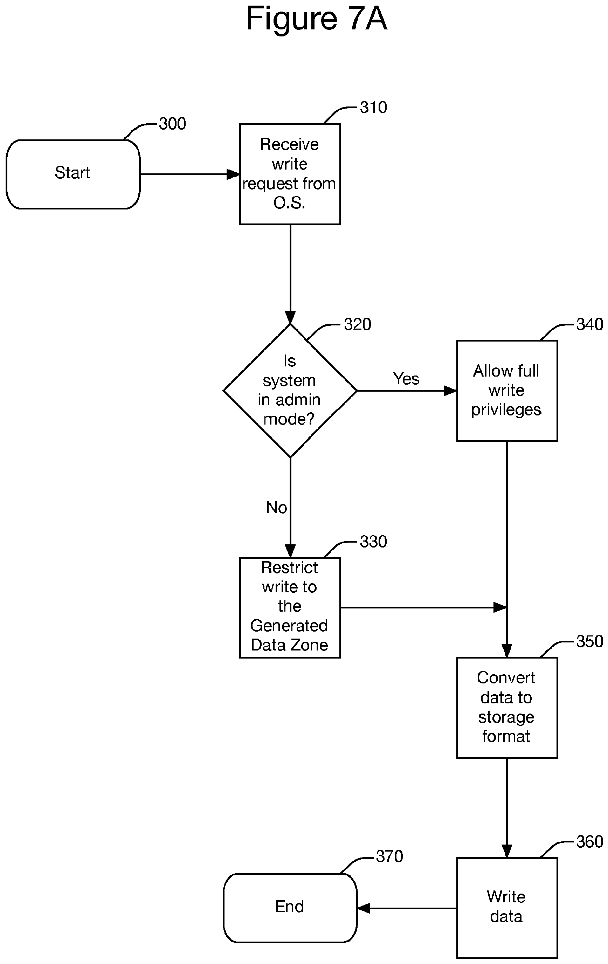

The Intermediary Data Handler **10** facilitates requests from the Operating System **160** to write information to the Storage Device **200** following a simple base logic (see Figure 7A). When the Received Write Request Process **300** is started **305** when the Intermediary Data Handler **10** receives a Write Request **310** from the operating system **160.** The SDSS checks to see if the Intermediary Data Handler **10** is in Administration Mode **320.** If the answer is "Yes," then the Intermediary Data Handler **10** will allow full write privileges **340.** If the answer is "No," then the Intermediary Data Handler **10** will Restrict **330** the Write Request to the Generated Data **20** zone. The Intermediary Data Handler **10** will Convert Data **350** to appropriate Converted Data Structure **40.** The Converted Data Structure **40** is then Written **360** to the Storage Device **200** and the Write Request Process **300** is Ended **370.**

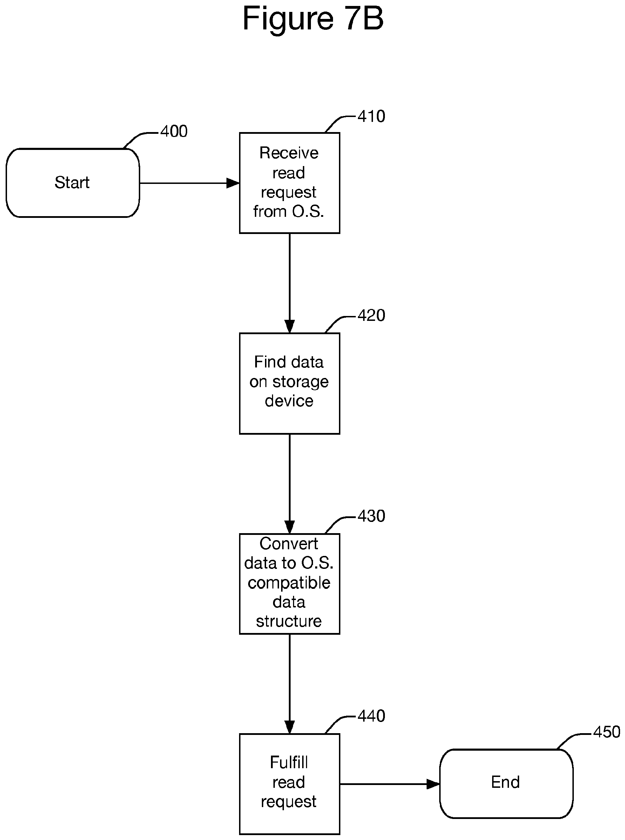

Read Requests received from the OS **160** are processed following a similar logic: Received Read Request Process **400** (see figure 7B). The Read Request Process **400** is Started **405** when the Intermediary Data Handler **10** detects a Read Request **410** from the Operating System **160.** The Intermediary Data Handler **10** then proceeds to Find Read Data **420** on the Storage Device **200.** The Intermediary Data Handler **10** then Converts **430** the Found Data to the OS Specific Data Structure **45** compatible with the current Operating System **160** platform, and Fulfills the Read Request **440**, after which the Received Read Request Process **400** is Ended **450.**

While the above description contains many specifics, these should not be construed as limitations on the scope of the invention, but rather as exemplifications of one or another preferred embodiment thereof. Other variations are possible, which would be obvious to one skilled in the art. Accordingly, the scope of the invention should be determined by the scope of the appended claims and their equivalents, and not just by the embodiments.

## Claims

1. An operating system independent Secured Data Storage Subsystem, SDSS, for use with an electrical computer/digital data processing apparatus (100), the SDSS comprising:
a data storage device (200) of said electrical computer/digital data processing apparatus (100) in indirect communications with the operating system (160): of the electrical computer/digital data processing apparatus (100);
an intermediary data handler (10) having a local hardware processor circuitry (170), a local buffer memory (175), a local data storage memory (180), and a user communication circuitry (185), with the intermediary data handler (10) being functionally disposed in communications between the operating system (160) of said electrical computer/digital data processing apparatus (100) and a storage memory (210) of the data storage device (200), wherein the local hardware processor circuitry (170) is independent from the operating system (160); and
a Data Handler Software/Instruction Set (178) which is resident in the local data storage memory (180) and executable by the intermediary data handler (10), the Data Handler Software/Instruction Set (178) enabling the intermediary data handler (10) to carry out its functions, being adapted to intercept a read/write request from the operating system (160) and to generate mock response data (20) in response to the read/write request, the mock response data (20) being in a data-structure format that is expected by the operating system (160), while separately preventing modification of data on the data storage device (200) to ensure the integrity of data in the storage memory (210).

2. An intermediary data handler (10) for use with a Secured Data Storage Subsystem, SDSS, the intermediary data handler (10) comprising:
a hardware processor circuitry (170),
a memory circuitry (175), and
a user communication circuitry (185), the intermediary data handler (10) being functionally disposed in communications between an operating system (160) of a host electrical computer/digital data processing apparatus (100) and a storage memory (210) of a data storage device (200), of said host electrical computer/digital data processing apparatus, wherein the data storage device is comprised in said SDSS , wherein the hardware processor circuitry (170) is independent from the operating system (160); and a Data Handler Software/Instruction Set (178), resident on and executable by the intermediary data handler (10), the Data Handler Software/Instruction Set (178) being adapted to generate a mock response data (20) in response to a read/write communication (110) from the operating system (160), the mock response data (20) being in a data-structure format that is expected by the operating system (100), while isolating and separately maintaining control over the original read/write communication (110) from the operating system (160), and further adapted to integrate operation and function of the intermediary data handler (10) with the host electrical computer/digital data processing apparatus (100) to accomplish the security of data stored in the storage memory (210) of the data storage device (200).

## Patentansprüche

1. Vom Betriebssystem unabhängiges gesichertes Datenspeichersubsystem, SDSS, zur Verwendung mit einem elektrischen Computer/einer digitalen Datenverarbeitungsvorrichtung (100), wobei das SDSS aufweist:
eine Datenspeichervorrichtung (200) des elektrischen Computers/der digitalen Datenverarbeitungsvorrichtung (100) in indirekter Kommunikation mit dem Betriebssystem (160) des elektrischen Computers/der digitalen Datenverarbeitungsvorrichtung (100);
einen intermediären Daten-Handler (10) mit einer lokalen Hardware-Prozessorschaltung (170), einem lokalen Zwischenspeicher (175), einem lokalen Datenspeicher (180) und einer Benutzerkommunikationsschaltung (185), wobei der intermediäre Daten-Handler (10) funktional in Kommunikation zwischen dem Betriebssystem (160) des elektrischen Computers/der digitalen Datenverarbeitungsvorrichtung (100) und einem Speicher (210) der Datenspeichervorrichtung (200) angeordnet ist, wobei die lokale Hardware-Prozessorschaltung (170) unabhängig von dem Betriebssystem (160) ist; und
eine/n Daten-Handler-Software/Befehlssatz (178), die/der in dem lokalen Datenspeicher (180) vorliegt und von dem intermediären Daten-Handler (10) ausführbar ist, wobei die/der Daten-Handler-Software/Befehlssatz (178) dem intermediären Daten-Handler (10) ein Ausüben seiner Funktionen ermöglicht und dazu ausgebildet ist zum Abfangen eines Lese-/Schreibefehls aus dem Betriebssystem (160) und zum Erzeugen von Pseudoantwortdaten (20) als Reaktion auf den Lese-/Schreibefehl, wobei die Pseudoantwortdaten (20) in einem Datenstrukturformat von dem Betriebssystem (160) erwartet werden, während separat eine Modifikation von Daten in der Datenspeichervorrichtung (200) verhindert wird, um die Integrität von Daten in dem Speicher (210) sicherzustellen.

2. Intermediärer Daten-Handler (10) zur Verwendung mit einem gesicherten Datenspeichersubsystem, SDSS, wobei der intermediäre Daten-Handler (10) aufweist:
eine Hardware-Prozessorschaltung (170),
eine Speicherschaltung (175), und
eine Benutzerkommunikationsschaltung (185),
wobei der intermediäre Daten-Handler (10) funktional in Kommunikation zwischen einem Betriebssystem (160) eines elektrischen Host-Computers/einer digitalen Host-Datenverarbeitungsvorrichtung (100) und einem Speicher (210) einer Datenspeichervorrichtung (200) des elektrischen Host-Computers/der digitalen Host-Datenverarbeitungsvorrichtung angeordnet ist, wobei die Datenspeichervorrichtung in dem SDSS enthalten ist,
wobei die Hardware-Prozessorschaltung (170) unabhängig von dem Betriebssystem (160) ist, und
eine/n Daten-Handler-Software/Befehlssatz (178), die/der in dem intermediären Daten-Handler (10) vorliegt und von diesem ausführbar ist, wobei die/der Daten-Handler-Software/Befehlssatz (178) ausgebildet ist zum Erzeugen von Pseudoantwortdaten (20) als Reaktion auf eine Lese-/Schreibkommunikation (110) aus den Betriebssystem (160), wobei die Pseudoantwortdaten (20) in einem Datenstrukturformat von dem Betriebssystem (160) erwartet werden, während die ursprüngliche Lese-/Schreibkommunikation (110) aus dem Betriebssystem (160) isoliert wird und separat darüber Kontrolle behalten wird, und ferner ausgebildet ist zum Integrieren des Betriebs und der Funktion des intermediären Daten-Handlers (10) in den elektrischen Host-Computers/die digitalen Host-Datenverarbeitungsvorrichtung (100), um die Sicherheit von in dem Speicher (210) der Datenspeichervorrichtung (200) gespeicherten Daten zu erreichen.

## Revendications

1. Sous-système de stockage sécurisé de données SDSS indépendant du système d'exploitation, destiné à être utilisé avec un appareil informatique électrique/appareil de traitement de données numériques (100), le SDSS comprenant :
un dispositif de stockage de données (200) dudit appareil informatique électrique/appareil de traitement de données numériques (100) en communication indirecte avec le système d'exploitation (160) de l'appareil informatique électrique/appareil de traitement de données numériques (100) ;
un gestionnaire de données intermédiaire (10) ayant un circuit de processeur matériel local (170), une mémoire tampon locale (175), une mémoire de stockage de données locale (180) et un circuit de communication utilisateur (185), le gestionnaire de données intermédiaire (10) étant disposé fonctionnellement dans des communications entre le système d'exploitation (160) dudit appareil informatique électrique/appareil de traitement de données numériques (100) et une mémoire de stockage (210) du dispositif de stockage de données (200), dans lequel le circuit de processeur matériel local (170) est indépendant du système d'exploitation (160) ; et
un logiciel/ensemble d'instructions de traitement de données (178) qui réside dans la mémoire de stockage de données locale (180) et qui est exécutable par le gestionnaire de données intermédiaire (10), le logiciel/ensemble d'instructions de traitement de données (178) permettant au gestionnaire de données intermédiaire (10) d'exécuter ses fonctions, étant adapté pour intercepter une demande de lecture/écriture du système d'exploitation (160) et pour générer des données de réponse fictive (20) en réponse à la demande de lecture/écriture, les données de réponse fictive (20) étant dans un format de structure de données qui est attendu par le système d'exploitation (160), tout en empêchant séparément la modification des données sur le dispositif de stockage de données (200) pour assurer l'intégrité des données dans la mémoire de stockage (210).

2. Gestionnaire de données intermédiaire (10) destiné à être utilisé avec un sous-système de stockage sécurisé de données (SDSS), le gestionnaire de données intermédiaire (10) comprenant :
un circuit de processeur matériel (170),
un circuit de mémoire (175), et
un circuit de communication utilisateur (185),
le gestionnaire de données intermédiaire (10) étant disposé fonctionnellement dans les communications entre un système d'exploitation (160) d'un appareil informatique électrique/appareil de traitement de données numériques hôte (100) et une mémoire de stockage (210) d'un dispositif de stockage de données (200), dudit appareil informatique électrique/appareil de traitement de données numériques hôte, dans lequel le dispositif de stockage de données est compris dans ledit SDSS, dans lequel le circuit de processeur matériel (170) est indépendant du système d'exploitation (160) ; et un logiciel/ensemble d'instructions de traitement de données (178), résidant sur et exécutable par le gestionnaire de données intermédiaire (10), le logiciel/ensemble d'instructions de traitement de données (178) étant adapté pour générer des données de réponse fictive (20) en réponse à une communication de lecture/écriture (110) provenant du système d'exploitation (160), les données de réponse fictive (20) étant dans un format de structure de données qui est attendu par le système d'exploitation (100), tout en isolant et en maintenant séparément le contrôle de la communication originale de lecture/écriture (110) du système d'exploitation (160), et adapté en outre pour intégrer le fonctionnement et la fonction du gestionnaire de données intermédiaire (10) avec l'appareil informatique électrique/appareil de traitement de données numériques hôte (100) pour assurer la sécurité des données stockées dans la mémoire de stockage (210) du dispositif de stockage de données (200).
